# EUROPEAN PATENT SPECIFICATION

(11) **EP 2 423 612 B1**
(45) Date of publication and mention of the grant of the patent: **22.02.2017**
(21) Application number: 11178225.6
(22) Date of filing: 22.08.2011
(51) Int. Cl.: F24F 3/06, F24F 11/00, F24D 17/02, F25B 13/00, F25B 49/02, F24H 6/00, F24D 17/00, F24F 1/26, F24F 1/30

(54) **Air conditioning system**
Klimaanlagensystem
Système de climatisation

(30) Priority: 25.08.2010 JP 2010188477
(43) Date of publication of application: 29.02.2012
(73) Proprietor: Johnson Controls-Hitachi Air Conditioning Technology (Hong Kong) Limited, Hong Kong (CN)
(72) Inventor: Nagamatsu, Shinichiro, Shizuoka (JP); Tezuka, Junichiro, Shizuoka (JP); Kawaguchi, Hiroyuki, Shizuoka (JP); Iwashina, Yoshinori, Shizuoka (JP); Watanabe, Masayoshi, Shizuoka (JP)
(74) Representative: Beetz & Partner mbB

(56) References cited:
- EP-A1- 2 184 563
- EP-A2- 0 188 630
- WO-A1-2009/122476
- WO-A1-2010/082324

## Description

### BACKGROUND OF THE INVENTION

The present invention relates to a multi-type air conditioning system having a heat source side unit and multiple use side units, and particularly to an air conditioning system capable of simultaneously performing air conditioning by the air conditioning system and hot water supply using exhaust heat thereof as a heat source.

A heat pump system disclosed in Japanese Patent No. 4229881 is used as a conventional air conditioning system capable of simultaneously performing air conditioning by the air conditioning system and hot water supply using exhaust heat thereof as a heat source. In this heat pump system, an air conditioning heat pump and hot water supply heat pump configured by multiple heat exchangers and compressors are installed within one chassis, and the heat pump system is connected to a heat load for indoor air conditioning or a hot water storage tank for hot water supply.

The hot water supply heat pump heats a hot water within the hot water storage tank, and carbon dioxide is used as a refrigerant. A heated gas from a compressor is heat-exchanged with a hot water within a heat exchanger at a supercritical state, and the hot water is heated to be stored in the hot water storage tank.

An air conditioning heat pump supplies warm heat or cold heat to each heat load. It has a compressor and a four-way valve for cooling-heating switching, and is connected to a heat exchanger serving as a condenser during cooling or an evaporator during heating.

The heat exchanger and each heat load are connected via a water pipe, and warm heat can be supplied to a use side heat load by a heat exchange between the heat exchanger and a hot water circulated by a circulating pump. Further, the air conditioning heat pump and the hot water storage tank are connected via a water pipe, and a hot water is cooled to thereby improve performance of the hot water supply heat pump.

Another air conditioning system according to the preamble of claim 1 is described in document EP-A-0188630.

### SUMMARY OF THE INVENTION

Used is a system in which in a heat pump system disclosed in Japanese Patent No. 4229881, two heat pumps of an air conditioning heat pump and a hot water supply heat pump are required and exchange heat between multiple water pipes and multiple heat exchangers. There is a problem that a system configuration becomes complicated and initial cost is elevated. Further, exhaust heat during a cooling operation of the air conditioning heat pump is used for the hot water supply heat pump through a geothermal heat tube. However, it is an indirect utilization method, and its effect is small. Further, a case where an air conditioning load of the air conditioning heat pump side is used for a simultaneous cooling and heating operation mode is not considered. Particularly, the invention disclosed in Japanese Patent No. 4229881 is devised on the premise that the air conditioning heat pump and the hot water supply heat pump are simultaneously installed as new facilities. The heat pump of the above invention fails to support a case where only air conditioning facilities are first introduced and then hot water supply facilities are additionally installed newly.

According to the present invention, when the hot water supply unit can be additionally installed later on an existing air conditioning system, an additional installation of a new heat source machine for the hot water supply unit is not required. In addition, there can be acquired an efficient air conditioning system in which exhaust heat generated from the air conditioning heat pump is effectively used to manufacture a hot water.

An air conditioning system includes a heat source side unit having a compressor, four-way valves, a heat source side heat exchanger, and expansion valves; multiple use side units each having a use side heat exchanger and an expansion valve; a liquid pipe, a high pressure gas pipe, and a low pressure gas pipe connecting the heat source side unit and the use side units; and a controller being connected to the heat source side unit and the multiple use side units via a transmission line and controlling the units, wherein in the controller, one control program in the case where the use side unit is connected, and another control program in the case where a hot water supply unit is connected in addition to the use side unit are stored; and when the hot water supply unit is connected to the liquid pipe and the high pressure gas pipe to connect the heat source side unit and the use side unit, and the hot water supply unit is connected to the transmission line, the controller recognizes connection to the hot water supply unit and is configured so as to control the heat source side unit, the use side unit, and the hot water supply unit according to the control program in the case where the hot water supply unit is connected in addition to the use side unit.

According to the present invention, since the air conditioning system has a configuration in which a hot water supply unit can be additionally installed later on an existing air conditioning system, an additional installation of a new heat source machine for the hot water supply unit is not required. In addition, there is exerted an effect of acquiring an efficient air conditioning system which can effectively use exhaust heat generated from an air conditioning heat pump and manufacture hot water.

### BRIEF DESCRIPTION OF THE DRAWINGS

FIG. 1 is a refrigeration cycle schematic diagram illustrating a first embodiment of an air conditioning system of the present invention;
FIG. 2 is a control block diagram according to the first embodiment illustrated in FIG. 1;
FIG. 3 is a flowchart illustrating a control flow such that connection to a hot water supply unit can be automatically recognized and controlled according to the first embodiment illustrated in FIG. 1;
FIG. 4 is a refrigeration cycle schematic diagram illustrating an operation during a simultaneous cooling and hot water supply operation mode according to the first embodiment illustrated in FIG. 1;
FIG. 5 is a refrigeration cycle schematic diagram illustrating an operation during a simultaneous heating and hot water supply operation mode according to the first embodiment illustrated in FIG. 1;
FIG. 6 is a refrigeration cycle schematic diagram illustrating an operation during a simultaneous cooling, heating, and hot water supply operation mode according to the first embodiment illustrated in FIG. 1;
FIG. 7 is a refrigeration cycle schematic diagram illustrating another operation during the simultaneous cooling, heating, and hot water supply operation mode according to the first embodiment illustrated in FIG. 1;
FIG. 8 is a front view in which a configuration of a heat source side unit illustrated in FIG. 1 is partly broken to view an internal configuration;
FIGS. 9A and 9B illustrate a configuration of the hot water supply unit illustrated in FIG. 1, wherein FIG. 9A is a plan view illustrating a chassis an upper panel of which is removed and FIG. 9B is a front view illustrating the chassis a front panel of which is removed;
FIG. 10 is a front view illustrating an installation example of the heat source side unit and hot water supply unit illustrated in FIG. 1; and
FIG. 11 is a connection diagram for transmission lines of an air conditioning system illustrated in FIG. 1.

### DESCRIPTION OF THE EMBODIMENTS

Specific embodiments of the present invention will be described below with reference to the accompanying drawings. In each drawing, components to which the same reference numeral is given illustrate the same component.

### First Embodiment

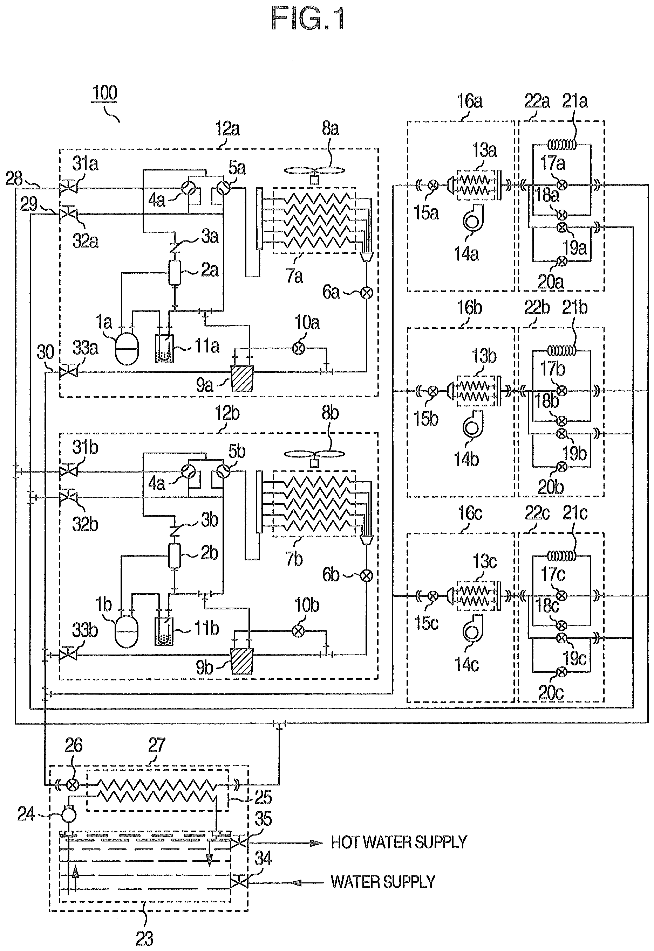

A first embodiment of an air conditioning system of the present invention will be described with reference to FIGS. 1 to 11.

FIG. 1 is a refrigeration cycle schematic diagram illustrating the first embodiment of the air conditioning system of the present invention.

The air conditioning system 100 according to the present embodiment includes a multi-type air conditioning apparatus configured by two heat source side units (12a, 12b), three use side units 16 (16a, 16b, 16c), and three cooling-heating switching units 22 (22a, 22b, 22c), one hot water supply unit 27, and a controller to control them.

In addition, the number of the heat source side units 12 to be connected is not limited to two units; further, it may be one unit or three or more units. If the number of the use side units to be connected is multiple units, it is preferable; further, it may be two units or four or more units. The number of the hot water supply units 27 to be connected may be two or more units.

The heat source side unit 12 (12a, 12b) is a simultaneous cooling and heating operation type heat source side unit capable of simultaneously performing cooling and heating operations. Each heat source side unit has an outdoor heat exchanger 7 (7a, 7b), a four-way valve 4 (4a, 4b) for switching high-low pressure, a four-way valve 5 (5a, 5b) for switching cooling-heating operation, a compressor 1 (1a, 1b), a gas liquid separator 11 (11a, 11b) provided on a refrigerant pipe at the suction side of the compressor, an oil separator 2 (2a, 2b) and check valve 3 (3a, 3b) provided on the refrigerant pipe at the discharge side of the compressor, a supercooler 9 (9a, 9b), and an electric expansion valve 6 (6a, 6b) and 10 (10a, 10b). Further, a reference numeral 8 (8a, 8b) denotes a blower to supply external air to the outdoor heat exchanger 7 and exchange heat. The compressor 1 (1a, 1b) is configured by a variable displacement compressor. In addition, the compressor 1 may be configured by one or multiple constant-speed compressors.

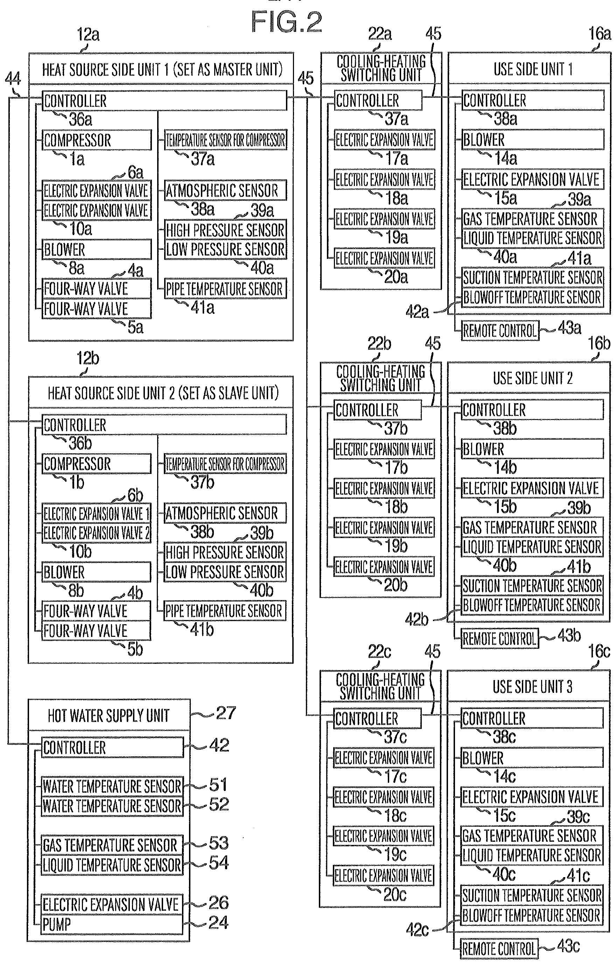

The four-way valve 5 (5a, 5b) for switching cooling-heating operation is switched over to the cooling operation side or the heating operation side and is used. In the case of performing the cooling operation, the four-way valve 4 (4a, 4b) for switching high-low pressure can be switched and used when a high-pressure gas pipe 28 is desired to be used as a low pressure gas pipe. The four-way valve 4 is used for expanding a low pressure gas flow channel and improving performance during the cooling operation. The above-described four-way valves 4 and 5 are controlled by a controller 36 (36a, 36b) (refer to FIG. 2) included in the heat source side unit 12.

A refrigerant pipe to control the heat source side unit 12 and the use side unit 16 is configured by the high pressure gas pipe 28, the low pressure gas pipe 29, and a liquid pipe 30. Each one end side of the above-described refrigerant pipes 28, 29, and 30 is connected to the heat source side units 12a and 12b via a high pressure gas blocking valve 31 (31a, 31b), a low pressure gas blocking valve 32 (32a, 32b), and a liquid blocking valve 33 (33a, 33b), respectively.

The use side unit 16 (16a, 16b, 16c) is configured by a heat exchanger 13 (13a, 13b, 13c), a blower 14 (14a, 14b, 14c), an electric expansion valve 15 (15a, 15b, 15c), and a controller 38 (38a, 38b, 38c) (refer to FIG. 2) to control them, respectively. One side of the heat exchanger 13 is connected to the liquid pipe 30 via the electric expansion valve 15. The other side thereof is connected to the cooling-heating switching unit 22 to be connected to the low pressure gas pipe during cooling or to be connected to the high pressure gas pipe during heating. The cooling-heating switching unit 22 can switch over each use side unit to the cooling side or the heating side and each use side unit can perform an operation. This cooling-heating switching unit 22 allows the use side unit performing a cooling operation and that performing a heating operation to mix with each other and perform an operation at the same time within the same air conditioning system.

The cooling-heating switching unit 22 (22a, 22b, 22c) is configured by a high pressure side main-electric expansion valve 17 (17a, 17b, 17c), a high pressure side sub-electric expansion valve 18 (18a, 18b, 18c), a low pressure side main-electric expansion valve 19 (19a, 19b, 19c), a low pressure side sub-electric expansion valve 20 (20a, 20b, 20c), a capillary 21 (21a, 21b, 21c), and a controller 37 (37a, 37b, 37c) (refer to FIG. 2) to control them, respectively. A pipe of one end side of this cooling-heating switching unit 22 is connected to the use side unit 16. In the other end side, the cooling-heating switching unit 22 is configured so as to connect the high pressure side main-electric expansion valve 17, the high pressure side sub-electric expansion valve 18, and the capillary 21 to the high pressure gas pipe 28, and so as to connect the low pressure side main-electric expansion valve 19 and the low pressure side sub-electric expansion valve 20 to the low pressure gas pipe 29. In the case where the use side unit performs a cooling operation, the high pressure side main-electric expansion valve 17 and the high pressure side sub-electric expansion valve 18 are set to be closed, the low pressure side main-electric expansion valve 19 and the low pressure side sub-electric expansion valve 20 are set to be opened, and a low pressure gas refrigerant evaporated by the heat exchanger 13 is allowed to flow through the low pressure gas pipe 29 side. On the other side, in the case where the use side unit performs a heating operation, the high pressure side main-electric expansion valve 17 and the high pressure side sub-electric expansion valve 18 are set to be opened, the low pressure side main-electric expansion valve 19 and the low pressure side sub-electric expansion valve 20 are set to be closed, and a gas refrigerant with high temperature and high pressure from the high pressure gas pipe 28 is allowed to flow through the heat exchanger 13.

The hot water supply unit 27 has a hot water storage tank 23, a heat exchanger 25 to exchange heat between water within the hot water storage tank 23 and a high pressure gas refrigerant from the heat source side unit 12, a circulating pump 24 to circulate water within the hot water storage tank 23 through the heat exchanger 25, and a water supply port 34 and a hot water supply port 35 provided on the hot water storage tank 23. Further, an inlet side of the heat exchanger 25 is connected to the high pressure gas pipe 28, and an outlet side thereof is connected to the liquid pipe 30. On the refrigerant pipe to connect the heat exchanger 25 and the liquid pipe 30, an electric expansion valve 26 is provided. The circulating pump 24 and the electric expansion valve 26 are configured so as to be controlled by a controller 42 (refer to FIG. 2) to control the hot water supply unit 27. The controller 42 to control this hot water supply unit 27 is connected to a transmission line 44 (refer to FIG. 2) to connect the controllers 36a and 36b for the heat source side units 12a and 12b. In addition, the water supply port 34 is connected to a water supply pipe and supplies water to the hot water storage tank 23, and the hot water supply port 35 is connected to a hot water supply pipe and supplies hot water.

FIG. 2 is a control block diagram according to the first embodiment illustrated in FIG. 1.

In each heat source side unit 12 (12a, 12b), the compressor 1 (1a, 1b), electric expansion valves 6 (6a, 6b) and 10 (10a, 10b), blower 8 (8a, 8b), and four-way valves 4 (4a, 4b) and 5 (5a, 5b) are controlled by the controller 36 (36a, 36b), respectively. To the controller 36, information from a temperature sensor for compressor 37 (37a, 37b), an atmospheric sensor 38 (38a, 38b), a high pressure sensor 39 (39a, 39b), a low pressure sensor 40 (40a, 40b), and a pipe temperature sensor 41 (41 a, 41b) is transmitted as control information. Based on the information from the above-described sensors, the controller 36 controls each component according to a previously-programmed control procedure and target values of pressure and temperature. The heat source side units 12a and 12b communicate with each other via the transmission line 44, and the heat source side unit 12a is set (master unit setting) as a master unit from the controller 36a during initial setting. At this time, the controller 36a of the heat source side unit 12a is determined as a main controller to control also the entire air conditioning system at the time of connecting the multiple heat source side units. On the other hand, the other heat source side unit 12b that is not set as a master unit during the initial setting is set (slave unit setting) as a slave unit. The controller 36b thereof controls each component within the heat source side unit 12b set as a slave unit according to commands from the main controller 36a of the heat source side unit 12a set as a master unit.

The main controller 36a is connected via the transmission line 45 (refer to FIG. 2) to the controller 38 (38a, 38b, 38c) of each use side unit 16 and the controller 37 (37a, 37b, 37c) of each cooling-heating switching unit 22 (22a, 22b, 22c). Further, the main controller 36a controls each component of each unit via the controller thereof.

In addition, in the main controller 36a, a control program A in the case where only the use side unit 16 for air conditioning is previously connected and a control program B in the case where the hot water supply unit 27 is connected in addition to the use side unit 16 for air conditioning are stored. Accordingly, on the occasion when the air conditioning system is first installed, when only the use side unit 16 for air conditioning is installed, the main controller 36a is controlled according to the control program A. Subsequently, when the hot water supply unit 27 is additionally installed on the air conditioning system, the control program A is changed into the control program B and the main controller 36a is controlled according to the control program B.

The use side unit 16 communicates with the controller (main controller) 36a of the heat source side unit 12a set as a master unit via the transmission line 45. Based on a starting-stopping signal of a remote control 43 (43a, 43b, 43c), the controller 38 controls the blower 14, and transmits temperature conditions set by the remote control 43 to the main controller 36a. In addition, the controller 38 transmits to the main controller 36a also detected values by a gas temperature sensor 39 (39a, 39b, 39c) to grasp a refrigerant state, a liquid temperature sensor 40 (40a, 40b, 40c), a suction temperature sensor 41 (41a, 41b, 41c) to grasp an air state, and a blowoff temperature sensor 42 (42a, 42b, 42c). Further, the main controller 36a transmits an opening degree command of the electric expansion valve 15 (15a, 15b, 15c) to adjust a refrigerant to an optimal refrigerant state to the controller 38 (38a, 38b, 38c) of each use side unit. The controller 38 controls the electric expansion valve 15 according to the command from the main controller 36a.

Along with the use side unit 16, the cooling-heating switching unit 22 communicates with the main controller 36a of the heat source side unit 12a set as a master unit via the transmission line 45. The main controller 36a controls an opening degree of the electric expansion valves 17, 18, 19, and 20 via the controller 37 of the cooling-heating switching unit 22 by the cooling operation command or heating operation command from the use side unit 16 communicating via the transmission line 45. The main controller 36a switches over the use side unit 16 so as to be connected to the high pressure gas pipe 31 or low pressure gas pipe 32. As a result, within one air conditioning system, the use side unit performing a cooling operation can be allowed to mix with the use side unit performing a heating operation and operate simultaneously therewith.

When the air conditioning system is first installed, the hot water supply unit 27 can also be simultaneously installed, or after the air conditioning system is installed and completed, it can be additionally installed later. The hot water supply unit 27 is connected to the liquid pipe 30 and the high pressure gas pipe 28 to control the heat source side unit 12 and the use side unit 16. Further, the controller 42 of the hot water supply unit 27 is connected to the transmission line 44 to connect the heat source side units 12a and 12b, and communicates with the main controller 36a of the heat source side unit 12a set as a master unit. When the controller 42 of the hot water supply unit 27 is connected to the transmission line 44, the main controller 36a recognizes the connection to the hot water supply unit 27. As a result, the main controller 36a controls the heat source side unit 12, the use side unit 16, and the hot water supply unit 27 according to the control program B in the case where the hot water supply unit 27 is connected in addition to the use side unit 16.

As described above, when recognizing that the hot water supply unit 27 is connected within the air conditioning system to be controlled, the main controller 36a controls the air conditioning by the use side unit and the hot water supply by the hot water supply unit so as to be operated at the same time. A water temperature sensor 51 to detect a temperature of water at the inlet side to the heat exchanger 25 of the hot water supply unit 27, a water temperature sensor 52 to detect a temperature of water at the outlet side of the heat exchanger 25, a gas temperature sensor 53 to detect a temperature of high pressure gas refrigerant at the inlet side of the heat exchanger 25, and a liquid temperature sensor 54 to detect a temperature of a condensate refrigerant at the outlet side of the heat exchanger 25 are provided. Each detected value from the above-described sensors is transmitted to the main controller 36a via the controller 42 of the hot water supply unit 27. The main controller 36a transmits a control command value of the electric expansion valve 26 and the circulating pump 24 to the controller 42 so that a water temperature and a refrigerant state may be optimized. Further, the controller 42 controls the electric expansion valve 26 and the circulating pump 24 based on the control command value.

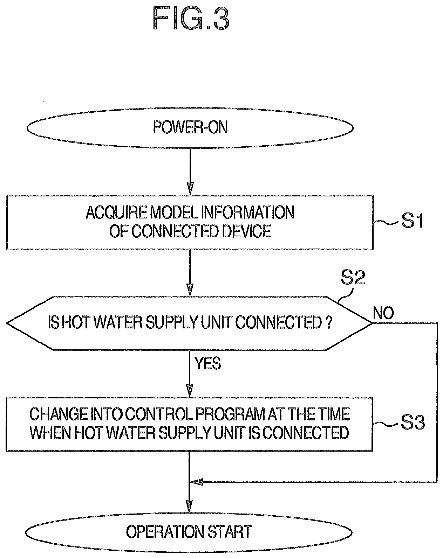

FIG. 3 is a flowchart illustrating a control flow such that the connection to the hot water supply unit can be automatically recognized and controlled according to the first embodiment illustrated in FIG. 1. When the air conditioning system is powered on, the controller (main controller) 36a of the heat source side unit 12a set as a master unit acquires model information of the connected devices (step S1). The controller 36a determines whether the acquired model information includes that of the hot water supply unit (step S2). If model information of the hot water supply unit is included therein, the process proceeds to step S3. The control program A is changed into the control program B in the case where the hot water supply unit 27 is connected in addition to the use side unit 16, and operation control is started according to this control program B. If model information of the hot water supply unit is not included therein in step S2, the operation control is started according to the control program A in the case where only the use side unit 16 for air conditioning is connected.

By performing configuration as described above, the hot water supply unit 27 can be additionally installed later on the existing air conditioning system 100, hot water can also be manufactured by the existing heat source side unit 12. Accordingly, a particular heat source side unit for hot water supply is not required, and in addition, since hot water can be manufactured by using heat of the use side unit 16 performing a cooling operation, an effect capable of improving efficiency of the entire air conditioning system is also exerted.

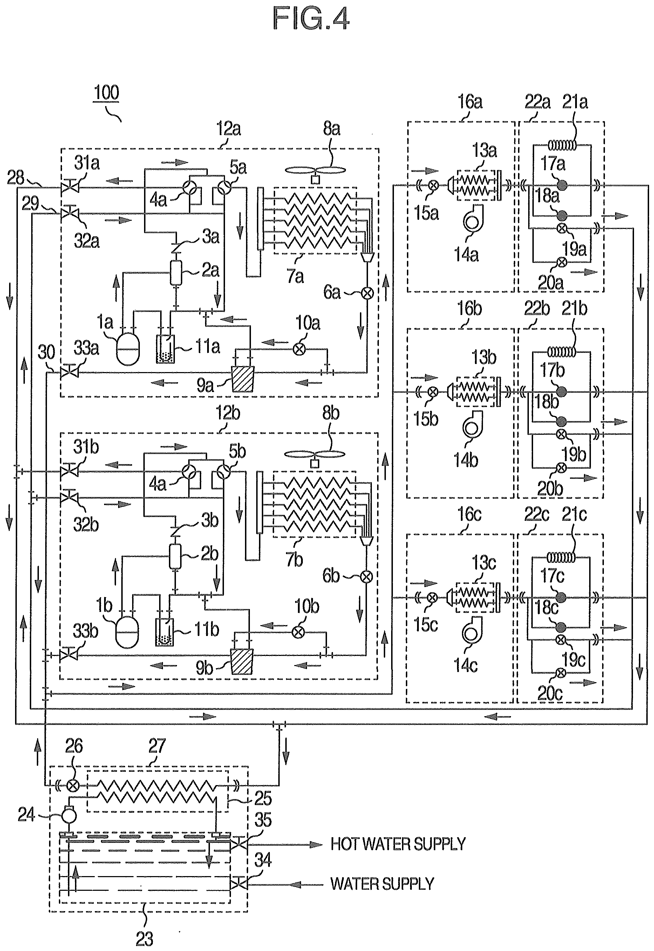

Operations according to the first embodiment illustrated in FIG. 1 will be described below with reference to FIGS. 4 to 7.

FIG. 4 is a refrigeration cycle schematic diagram illustrating an operation during a simultaneous cooling and hot water supply operation mode according to the first embodiment illustrated in FIG. 1. A flow of the refrigerant in the case where all the use side units 16 perform a cooling operation, and at the same time, the hot water supply unit 27 also performs an operation will be described.

The refrigerant flows in the direction of a solid arrow illustrated in FIG. 4, one high pressure gas refrigerant discharged from the compressor 1 (1a, 1b) passes through the four-way valve 4 (4a, 4b), and flows through the high pressure gas blocking valve 31 (31 a, 31b) and the high pressure gas pipe 28. The other high pressure gas refrigerant passes through the four-way valve 5 (5a, 5b) and is condensed by the heat exchanger 7 (7a, 7b) on the heat source side configured by multiple refrigerant passages. When passing through the supercooler 9 (9a, 9b), the condensed liquid refrigerant is heat-exchanged with refrigerant branched on an upstream side of the supercooler 9 and depressurized by the electric expansion valve 10 (10a, 10b) and is further cooled. As a result, the refrigerant passing through the liquid blocking valve 33 becomes a supercooled state. The branched and depressurized refrigerant becomes a superheated state, and flows through the gas liquid separator 11 (11 a, 11b) via the low pressure side pipe. The supercooler 9 exerts an effect capable of increasing the degree of supercooling of the refrigerant and performing an operation with higher efficiency with compared with a case of exchanging heat by using only the heat exchanger 7. Further, since the branched refrigerant does not pass through the heat exchanger 13 of the use side unit 16, pressure loss of the low pressure gas pipe 29 can also be reduced. Particularly, there exerts an effect of improving performance at the time when a long pipe is laid for a long distance between the heat source side unit 12 and the use side unit 16. The refrigerant passing through the liquid pipe 30 flows in the electric expansion valve 15 of the use side unit 16. The electric expansion valve 15 is an expansion device settable to an arbitrary throttle amount. The refrigerant depressurized by the electric expansion valve 15 passes through the heat exchanger 13 as an evaporator of the use side unit 16 and is evaporated. Further, the refrigerant is heat-exchanged with indoor air from the blower 14, and cools the indoor air. The refrigerant evaporated by the heat exchanger 13 flows through the low pressure gas pipe 29 via the cooling-heating switching unit 22. The refrigerant further flows in the gas liquid separator 11, and is adjusted to an appropriate degree of dryness for suction and is sucked into the compressor 1 again. During the cooling operation, the cooling-heating switching unit 22 is controlled so that the low pressure side main-electric expansion valve 19 and low pressure side sub-electric expansion valve 20 of the cooling-heating switching unit 22 may be set to be opened and the high pressure side main-electric expansion valve 17 and high pressure side sub-electric expansion valve 18 thereof may be set to be closed.

When a cooling load of the use side unit 16 is small, or when the use side capacity is reduced, capacity of the variable displacement compressor 1 of the heat source side unit 12 is reduced according to load variations of the use side unit 16, or an air volume of the blower 8 of the heat source side unit 12 is reduced and the heat exchange amount is reduced. Further, when the load of the use side unit 16 is extremely reduced with respect to the capacity of the heat source side unit 12, the number of the heat source side units 12 to be operated is also reduced.

When the use side unit 16 performs a cooling operation, the cooling-heating switching unit 22 closes the high pressure side electric expansion valves 17 and 18, and opens the low pressure side electric expansion valves 19 and 20 in order to connect to the low pressure gas pipe 29. When diameters of the electric expansion valves 17 to 20 to connect to the high pressure gas pipe 28 or the low pressure gas pipe 29 are set to be different from each other and an operation is performed in order from an electric expansion valve with a small diameter, the cooling-heating switching unit 22 exerts an effect capable of reducing a refrigerant flowing sound due to a pressure change during the operation of the electric expansion valve. In addition, even if a single operation of the electric expansion valves 17 to 20 is performed, a refrigerant flow can be controlled. Further, in the present embodiment, the capillary 21 to bypass the electric expansion valve 17 installed on the high pressure side is installed. The cooling-heating switching unit 22 exerts an effect capable of relieving a sealing of the refrigerant during closure of the electric expansion valve 17 and a pressure increase due to gasification of the refrigerant by providing this capillary 21.

Further, the gas refrigerant with high temperature and high pressure flowing through the high pressure gas pipe 28 flows in the hot water supply unit 27, and is heat-exchanged with water from the hot water storage tank 23 circulated by the circulating pump 24 in the heat exchanger 25. In the heat exchanger 25, the gas refrigerant becomes a gas-liquid two-phase state, and the circulated water is heated and raised up to a hot water supply available temperature. The hot water supply unit 27 controls the circulating pump 24 according to the detection temperature from a water temperature sensor 51 to detect a temperature of water supplied to the heat exchanger 25 and a water temperature sensor 52 (refer to FIG. 2) to detect a temperature of hot water heated by the heat exchanger 25 to be returned to the hot water storage tank 23, which are provided within the hot water storage tank 23, and controls a temperature of water within the hot water storage tank 23 depending on the situation of necessity of the hot water supply. When the hot water supply unit 27 adjusts an opening degree of the electric expansion valve 26 and controls a refrigerant flow rate according to a value of the gas temperature sensor 53 to detect a temperature of the refrigerant flowing through the inlet side of the heat exchanger 25 and that of the liquid temperature sensor 54 to detect a temperature of the refrigerant flowing through the outlet side thereof, and a temperature of water within the hot water storage tank 23, a heat exchange amount between the heated refrigerant gas and the circulating water is controlled so as to be optimized. As a result, the simultaneous operation of the stabilized cooling operation and hot water supply operation can be performed.

The refrigerant passing through the electric expansion valve 26 is connected to the liquid pipe 30, and flows in the use side unit 16. As a result, there can be acquired the air conditioning system with high efficiency in which a part of heat quantity absorbed by the use side unit 16 and exhausted by the heat exchanger 7 of the heat source side unit 12 to atmosphere can be reused as a heat source of the hot water supply unit 27, and the load of the heat source side unit 12 is reduced and the exhaust heat quantity to atmosphere is also reduced.

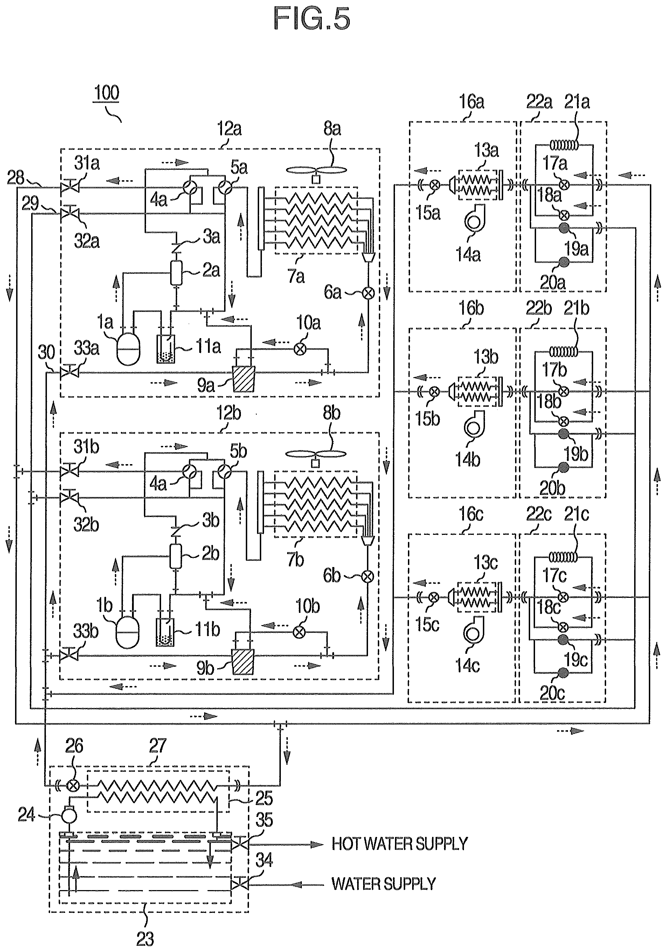

FIG. 5 is a refrigeration cycle schematic diagram illustrating an operation during a simultaneous heating and hot water supply operation mode according to the first embodiment illustrated in FIG. 1. A flow of the refrigerant in the case where all the use side units 16 each perform a heating operation, and at the same time, the hot water supply unit 27 performs an operation will be described.

The refrigerant flows in the direction of a dotted arrow illustrated in FIG. 5, gas refrigerant discharged from the compressor 1 passes through the four-way valve 4, and flows through the high pressure gas blocking valve 31 and the high pressure gas pipe 28. The refrigerant flowing through the high pressure gas pipe 28 passes through the high pressure side main-electric expansion valve 17 and sub-electric expansion valve 18 in the cooling-heating switching unit 22, and flows in the use side unit 16. The gas refrigerant with high temperature and high pressure flowing through the use side unit 16 is heat-exchanged with indoor air from the blower 14 and is condensed by the heat exchanger 13 configured by the multiple refrigerant passages. The gas refrigerant is appropriately adjusted with respect to a throttle amount so as to secure the appropriate degree of supercooling by the electric expansion valve 15. When the gas refrigerant with high temperature and high pressure radiates heat in the heat exchanger 13, the heating operation is performed. The condensed liquid refrigerant flows through the liquid pipe 30 to connect the heat source side unit 12 and the use side unit 16, passes through the liquid blocking valve 33 and the supercooler 9, and flows in the electric expansion valve 6 to be depressurized. The electric expansion valve 6 is an expansion device settable to an arbitrary throttle amount. The refrigerant depressurized by the electric expansion valve 6 flows in the heat source side heat exchanger 7 serving as an evaporator and is evaporated. The evaporated refrigerant passes through the four-way valve 5, is adjusted to an appropriate degree of dryness for suction by the gas liquid separator 11, and is sucked into the compressor 1 again.

When a heating load of the use side unit 16 is small, or when the use side capacity is reduced, capacity of the variable displacement compressor 1 of the heat source side unit 12 is reduced according to load variations of the use side unit 16, or an air volume of the blower 8 of the heat source side unit 12 is lowered and the heat exchange amount is reduced. Further, when the load of the use side unit 16 is extremely reduced with respect to the capacity of the heat source side unit 12, the number of the heat source side units 12 to be operated is reduced.

Further, the gas refrigerant with high temperature and high pressure flowing through the high pressure gas pipe 28 partly flows in the hot water supply unit 27, and is heat-exchanged with water from the hot water storage tank 23 circulated by the circulating pump 24 in the heat exchanger 25. In the heat exchanger 25, the gas refrigerant becomes a gas-liquid two-phase state, and the circulated water is heated and raised up to a hot water supply available temperature. The hot water supply unit 27 controls the circulating pump 24 and controls a water temperature within the hot water storage tank 23 depending on the situation of necessity of the hot water supply according to the detection temperature from a water temperature sensor 51 to detect a temperature of water supplied to the heat exchanger 25 and a water temperature sensor 52 to detect a temperature of hot water heated by the heat exchanger 25 to be returned to the hot water storage tank. When the hot water supply unit 27 controls an opening degree of the electric expansion valve 26 and a refrigerant flow rate according to a value of the gas temperature sensor 53 to detect a temperature of the refrigerant flowing through the inlet side of the heat exchanger 25, and that of the liquid temperature sensor 54 to detect a temperature of the refrigerant flowing through the outlet side thereof, and a temperature within the hot water storage tank 23, a heat exchange amount between the heated refrigerant gas and the circulating water is controlled so as to be optimized. As a result, the simultaneous operation of the stabilized heating operation and hot water supply operation can be performed.

The refrigerant passing through the electric expansion valve 26 is connected to the liquid pipe 30, flows together with the liquid refrigerant from the use side unit 16, and flows to the heat source side unit 12. After depressurized by the electric expansion valve 6, the refrigerant absorbs heat and evaporates by the heat exchange with atmosphere along with the refrigerant from the use side unit 16 in the heat exchanger 7, and is sucked in the compressor 1 via the gas liquid separator 11.

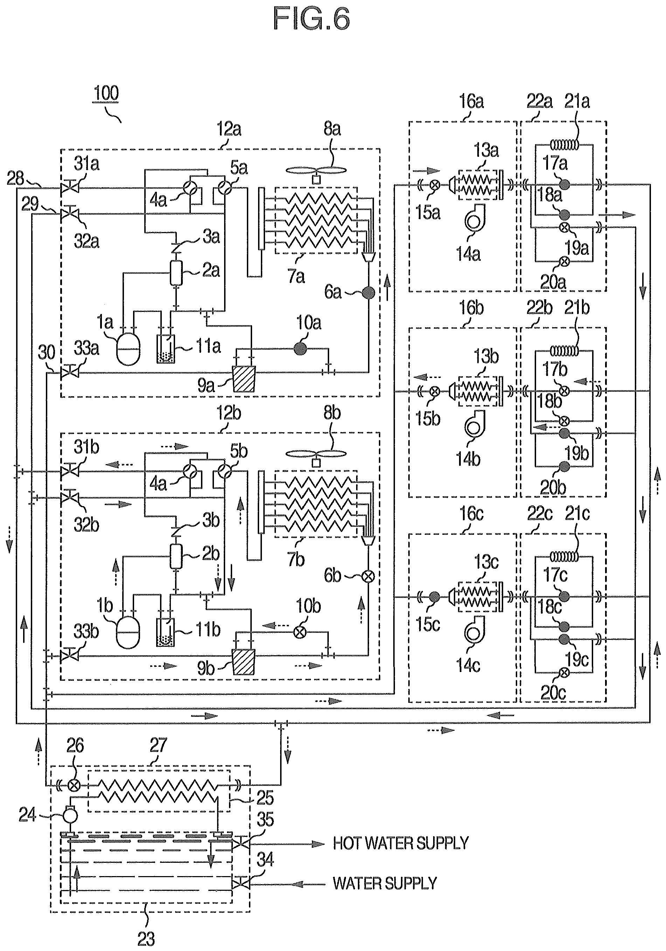

FIG. 6 is a refrigeration cycle schematic diagram illustrating an operation during a simultaneous cooling, heating, and hot water supply operation mode according to the first embodiment illustrated in FIG. 1. A flow of the refrigerant in the case where the use side unit 16a performs a cooling operation, the use side unit 16b performs a heating operation, and at the same time, the hot water supply unit 27 performs an operation will be described. In this example, the use side unit 16c is stopped.

When the hot water supply unit 27 is operated, the heat source side unit 12a is stopped, and the heat exchanger 7b of the heat source side unit 12b is used as an evaporator. In addition, as to whether the heat source side 12a or 12b is determined as the pause side heat source side unit, the main controller 36a of the heat source side unit 12a set as a master unit performs rotation control so that the operation time of the respective heat source side units may be equalized, in consideration of an operation time of the respective heat source side units 12a and 12b.

The gas refrigerant with high temperature and high pressure discharged from the compressor 1b flows through the high pressure gas blocking valve 31b and the high pressure gas pipe 28 via the four-way valve 4b. The refrigerant flowing through the high pressure gas pipe 28 passes through the high pressure side electric expansion valves 17b and 18b of the cooling-heating switching unit 22b, and flows in the use side unit 16b. When the gas refrigerant flowing in the use side unit 16b radiates heat and is condensed in the heat exchanger 13b configured by multiple refrigerant passages, the heating operation is performed. The condensed liquid refrigerant is adjusted to a throttle amount so as to secure the arbitrary degree of supercooling by the electric expansion valve 15b. On the other hand, the condensed liquid refrigerant flows in the electric expansion valve 15a of the use side unit 16a performing the cooling operation at the same time. The electric expansion valve 15a is an expansion device settable to an arbitrary throttle amount. The refrigerant depressurized by the electric expansion valve 15a flows in the use side heat exchanger 13a as an evaporator and is evaporated. Further, the refrigerant cools the indoor air. The evaporated refrigerant passes through the low pressure side electric expansion valves 19 and 20 of the cooling-heating switching unit 22a, and flows through the low pressure gas pipe 29. The refrigerant is adjusted to an appropriate degree of dryness for suction by the gas liquid separator 11b of the heat source side unit 12b, and then is sucked into the compressor 1 again. As described above, the liquid refrigerant to radiate heat during the heating operation of the use side unit 16b is used for absorbing heat during the cooling operation of the use side unit 16a. This process permits a heat recovery cycle to be performed, and the simultaneous cooling and heating operation mode with high efficiency to be realized.

Further, the heated gas refrigerant flowing through the high pressure gas pipe 28 flows in the hot water supply unit 27, and is heat-exchanged with water from the hot water storage tank 23 circulated by the circulating pump 24 in the heat exchanger 25. The gas refrigerant becomes a gas-liquid two-phase state in the heat exchanger 25, and the circulating water is heated and raised up to the hot water supply available temperature. The hot water supply unit 27 controls the circulating pump 24 according to the detection temperature from a water temperature sensor 51 to detect a temperature of water supplied to the heat exchanger 25 and a water temperature sensor 52 to detect a temperature of hot water heated by the heat exchanger 25 to be returned to the hot water storage tank, and controls a temperature of water within the hot water storage tank 23 depending on the situation of necessity of the hot water supply. When the hot water supply unit 27 adjusts an opening degree of the electric expansion valve 26 and controls a refrigerant flow rate according to a value of the gas temperature sensor 53 to detect a temperature of the refrigerant flowing through the inlet side of the heat exchanger 25 and that of the liquid temperature sensor 54 to detect a temperature of the refrigerant flowing through the outlet side thereof, and a temperature of water within the hot water storage tank 23, a heat exchange amount between the heated refrigerant gas and the circulating water is operated so as to be optimized. As a result, the simultaneous operation of the stabilized cooling, heating, and hot water supply operations can be performed.

The refrigerant passing through the electric expansion valve 26 flows in the heat source side unit 12b (when the cooling load of the use side unit 16a is large, the refrigerant partly flows also in the use side unit 16a) via the liquid pipe 30. After depressurized by the electric expansion valve 6b, the refrigerant absorbs heat and is evaporated by the heat exchange with atmosphere in the heat exchanger 7b, and is sucked into the compressor 1 via the gas liquid separator 11.

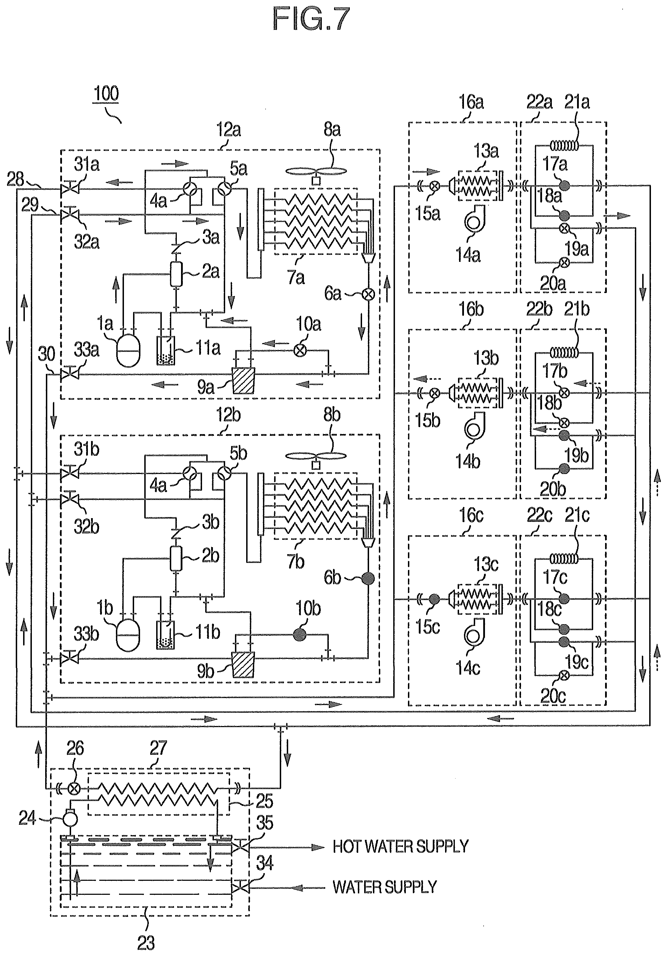

FIG. 7 is a refrigeration cycle schematic diagram illustrating an operation during a simultaneous cooling, heating, and hot water supply operation mode according to the first embodiment illustrated in FIG. 1. FIG. 7 illustrates another operation different from that illustrated in FIG. 6. This operation example is an example in the case where the cooling load of the use side unit is larger than the heating load thereof. When the heat source side unit 12a is used as a condenser, the refrigeration cycle keeps a heat budget between the condenser and the evaporator, and realizes an appropriate cycle state.

Specifically, in the example of FIG. 6, since a load resulting from adding the heating load and the hot water supply load is larger than the cooling load, the condensed refrigerant is partly evaporated by the heat exchanger of the heat source side unit and absorbs heat from atmosphere. On the other hand, in the example of FIG. 7, since the cooling load is larger than the load resulting from adding the heating load and the hot water supply load, the high pressure gas refrigerant from the compressor is partly condensed by the heat exchanger of the heat source side unit to radiate heat to atmosphere. The above-described condensed refrigerant is added to that from the heating load and the hot water supply load to be supplied to the cooling load. The other operations are performed approximately in the same manner as those illustrated in FIG. 6, and therefore the description will be omitted.

As in the example of FIG. 7 and the above-described example of FIG. 6, the heat source side unit is used as a condenser or evaporator according to conditions of the cooling load and heating load of the use side unit and the load of the hot water supply unit. When further controlling the number of the heat source side units to be operated and the compressor capacity, a refrigeration cycle capable of the simultaneous cooling, heating, and hot water supply operation mode can be established in the same air conditioning system.

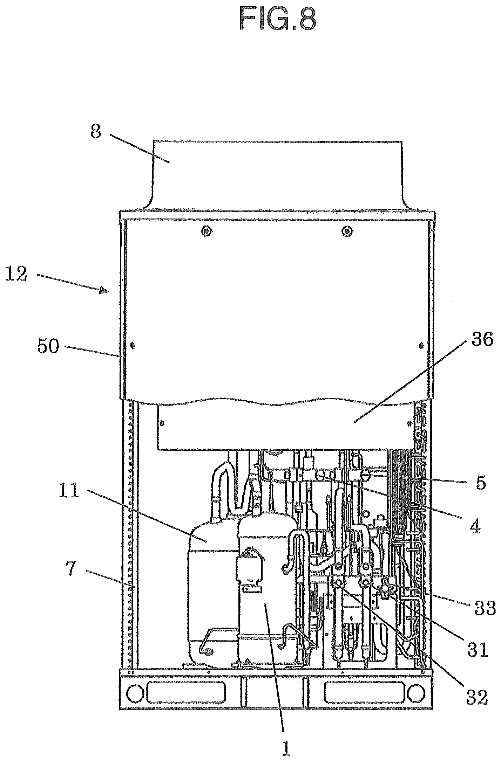

FIG. 8 is a front view in which a configuration of the heat source side unit illustrated in FIG. 1 is partly broken to view an internal configuration. In FIG. 8, within a chassis 50 of the heat source side unit 12, components configuring the heat source side unit 12 illustrated in FIG. 1, such as the compressor 1, the four-way valve 4 for switching high or low pressure, the four-way valve 5 for switching cooling or heating operation, the heat exchanger 7, the gas liquid separator 11, the high pressure gas blocking valve 31, the low pressure gas blocking valve 32, and the liquid blocking valve 33 are connected by the refrigerant pipes to be stored. Above the compressor 1, the controller 36 illustrated in FIG. 2 is further installed. In the upper part of the chassis 50, the blower 8 is further installed, and sucks external air through the heat exchanger 7, and exhausts air after the heat exchange upward the chassis. The compressor 1 and the gas liquid separator 11 are connected via the four-way valves 4 and 5. The high pressure gas blocking valve 31, the low pressure gas blocking valve 32, and the liquid blocking valve 33 are provided on the front side of the heat source side unit. During the installation of the air conditioning system, the heat source side unit, the use side unit, and the hot water supply unit can be easily connected by the refrigerant pipes.

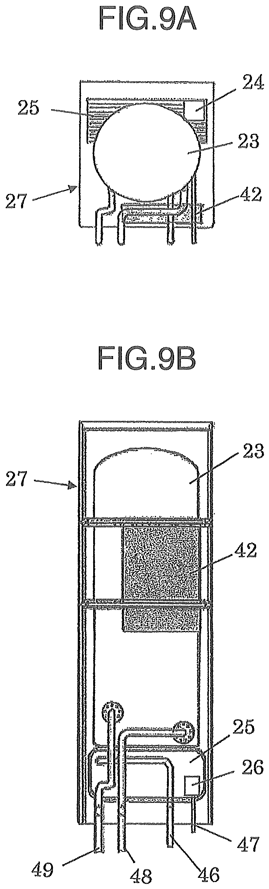

FIGS. 9A and 9B illustrate a configuration of the hot water supply unit illustrated in FIG. 1, FIG. 9A is a plan view illustrating the chassis an upper panel of which is removed, and FIG. 9B is a front view illustrating the chassis a front panel of which is removed. In the chassis of the hot water supply unit 27, the hot water storage tank 23, the circulating pump 24, the heat exchanger 25, the electric expansion valve 26, and the controller 42 are stored. In this example, the heat exchanger 25 is configured by a plate-type heat exchanger. Further, a reference numeral 46 denotes a high pressure gas pipe port to connect to the high pressure gas pipe 28 of the refrigeration cycle, a reference numeral 47 denotes a liquid pipe port to connect to the liquid pipe 30 of the same refrigeration cycle, a reference numeral 48 denotes a water supply pipe to supply water to the hot water storage tank 23, and a reference numeral 49 denotes a hot water supply pipe to send hot water of the hot water storage tank 23 to a hot water supply location.

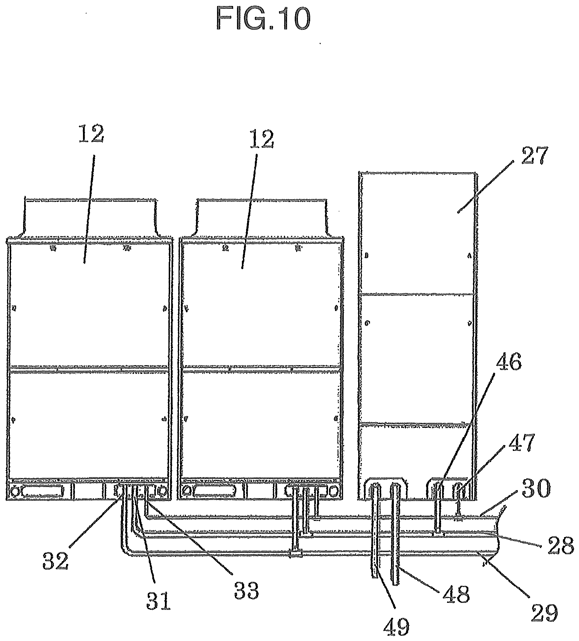

FIG. 10 is a front view illustrating an installation example of the heat source side unit and the hot water supply unit illustrated in FIG. 1, and illustrates an example of a case in which two heat source side units 12 and one hot water supply unit 27 are installed. To the high pressure gas blocking valve 31, the low pressure gas blocking valve 32, and the liquid blocking valve 33 of each heat source side unit 12, the high pressure gas pipe 28, the low pressure gas pipe 29, and the liquid pipe 30 are connected, respectively. Further, to the high pressure gas pipe port 46 and the liquid pipe port 47 of the hot water supply unit 27, the high pressure gas pipe 28 and the liquid pipe 30 are connected, respectively. Further, to the hot water supply unit 27, the water supply pipe 48 and the hot water supply pipe 49 are also connected. The heat source side unit 12 for air conditioning is shared as a heat source machine of the hot water supply unit 27, and therefore since the heat source machine for hot water supply is not required, space and cost can be reduced as compared with a case where the air conditioning system and the hot water supply system are established separately.

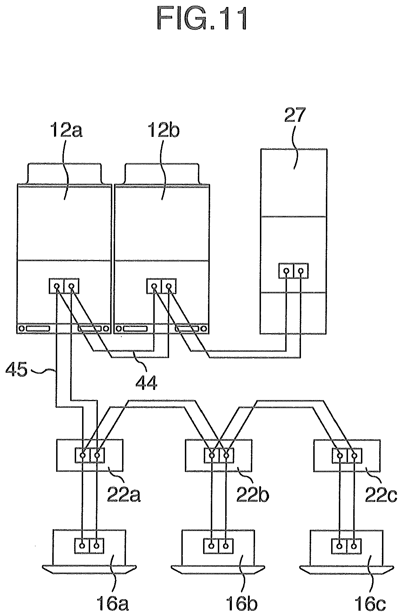

FIG. 11 is a connection diagram for transmission lines of the air conditioning system illustrated in FIG. 1. To the heat source side unit 12a set as a master unit, the heat source side unit 12b and the hot water supply unit 27 are connected via the transmission lines 44. To the heat source side unit 12a, the cooling-heating switching units 22 (22a, 22b, 22c) are connected via the transmission lines 45. To the heat source side unit 12a, the use side units 16 (16a, 16b, 16c) are further connected via the above-described cooling-heating switching units 22.

According to the above-described embodiment of the present invention, to the existing air conditioning system capable of the simultaneous cooling and heating operation mode, the hot water supply unit can be connected after installation. Accordingly, the heat source machine dedicated for hot water supply can be eliminated. Heat exhausted from the air conditioning system is used as a heat source to enable air conditioning or hot water supply, and efficiency can also be improved.

Particularly, since a cooling or heating operation is individually set for each room in hotels or hospitals, a multi-type air conditioning system capable of the simultaneous cooling and heating operation mode is increasing in one air conditioning system. A heat source side unit does not need to be installed in each floor by using this air conditioning system. Further, since the number of pipes to connect the heat source side unit and the use side unit can also be reduced, a piping space can also be reduced. When a hot water supply system is additionally installed newly, an electric heater or gas heater to manufacture hot water or a heat source machine to operate a heat pump is required in addition to a hot water storage tank or heat exchanger. When an electric heater or gas heater is adopted as a heat source, there is a problem in view of efficiency. On the other hand, there is a problem that when a hot water supply system using a heat pump is adopted, an expensive heat source machine is required and a wide installation space is also required.

As compared with the above, by the adoption of the present embodiment, an additional installation of the hot water supply unit can be performed without newly installing a heat source machine dedicated for hot water supply. Since a heat source unit for air conditioning and that for hot water supply can be shared, cost and space can be reduced. Further, when the simultaneous operation of air conditioning and hot water supply is performed in the same refrigeration cycle, exhaust heat at the time of performing an air conditioning operation can be used for a hot water supply operation, and further an efficient air conditioning system can be realized. Further, since a heat source unit and a hot water supply unit are configured by separate chassis, the proposed air conditioning system is compact and has excellent transportability as compared with a system resulting from integrating a heat source unit and a hot water supply unit.

As can be seen from the above discussion, according to the present embodiment, an efficient air conditioning system capable of using exhaust heat due to air conditioning for hot water supply can be realized. At the same time, there is exerted an effect capable of additionally installing an inexpensive hot water supply unit in which an installation space can be reduced with respect to an existing air conditioning system.

## Claims

1. An air conditioning system (100) comprising:
a heat source side unit having a compressor (1), four-way valves (4, 5), a heat source side heat exchanger (7), and expansion valves (6, 10);
multiple use side units (16) each having a use side heat exchanger (13) and an expansion valve (15);
a liquid pipe (30), a high pressure gas pipe (28), and a low pressure gas pipe (29) connecting the heat source side unit (12) and the use side units (16); and
a controller (36) being connected to the heat source side unit (12) and the multiple use side units (16) via a transmission line and controlling the units, **characterized in that**
in the controller (36), one control program in the case where the use side unit (16) is connected, and another control program in the case where a hot water supply unit (27) is connected in addition to the use side unit (16) are stored; and
when the hot water supply unit (27) is connected to the liquid pipe (30) and the high pressure gas pipe (28) to connect the heat source side unit (12) and the use side unit (16), and the hot water supply unit (27) is connected to the transmission line, the controller (36) recognizes connection to the hot water supply unit (27) and is configured so as to control the heat source side unit, the use side unit, and the hot water supply unit according to the control program in the case where the hot water supply unit is connected in addition to the use side unit (16).

2. The air conditioning system (100) according to claim 1,
wherein:
the hot water supply unit (27) has a hot water storage tank (23), a heat exchanger (25) to exchange heat between water within the hot water storage tank (23) and a high pressure gas refrigerant from the heat source side unit (12), and a controller (42) to control the hot water supply unit (27); and
an inlet side of the heat exchanger (25) is connected to the high pressure gas pipe (28), an outlet side is connected to the liquid pipe (30), and the controller (42) to control the hot water supply unit (27) is connected to the transmission line.

3. The air conditioning system according to claim 2,
wherein:
the hot water supply unit (27) has a water supply port (34) and hot water supply port (35) provided on the hot water storage tank (23), a circulating pump (24) to circulate water within the hot water storage tank (23) through the heat exchanger (25), and an electric expansion valve (26) provided on a refrigerant pipe to connect the heat exchanger (25) and the liquid pipe (30); and
the circulating pump (24) and the electric expansion valve (26) are controlled by the controller (42) to control the hot water supply unit (27).

4. The air conditioning system (100) according to claim 1,
wherein to a cooling-heating switching unit (22), each of the use side units (16) is connected in order that one side of a use side heat exchanger (13) may be connected to the liquid pipe (30) via the expansion valve (15), and another side may be connected to the low pressure gas pipe (29) during cooling or the high pressure gas pipe (28) during heating.

5. The air conditioning system (100) according to claim 1, further comprising:
a high pressure gas blocking valve (31) provided on the heat source side unit (12) side of the high pressure gas pipe (28);
a low pressure gas blocking valve (32) provided on the heat source side unit (12) side of the low pressure gas pipe (29); and
a liquid blocking valve (33) provided on the heat source side unit (12) side of the liquid pipe (30).

6. The air conditioning system (100) according to claim 1,
wherein the compressor (1) provided on the heat source side unit (12) is configured by a variable displacement compressor or multiple constant-speed compressors, and at the same time, a gas liquid separator (11) is included at a suction side of the compressor (1).

7. The air conditioning system (100) according to claim 1,
wherein:
the multiple heat source side units (12) are included, and at the same time, each of the heat source side units (12) mounts a controller (36) to control each heat source side unit (12); and
the controller (36) mounted on any one of the heat source side units (12) controls also the entire air conditioning system (100) as a main controller.

8. The air conditioning system (100) according to claim 7,
wherein:
on each of the use side units (16) and the hot water supply unit (27), a controller (38, 42) to control each unit is mounted,
the main controller of the one heat source side unit (12) and the controller of each unit are connected via the transmission line; and
the main controller controls each of the units via the controller of each unit.

## Patentansprüche

1. Klimaanlagensystem (100) mit:
einer wärmequellenseitigen Einheit mit einem Kompressor (1), Vierwegeventilen (4, 5), einem wärmequellenseitigen Wärmetauscher (7) und Entspannungsventilen (6, 10),
mehreren benutzungsseitigen Einheiten (16), die jeweils einen benutzungsseitigen Wärmetauscher (13) und ein Entspannungsventil (15) aufweisen,
einer Flüssigkeitsleitung (30), einer Hochdruckgasleitung (28) und einer Niedrigdruckgasleitung (29), die die wärmequellenseitige Einheit (12) und benutzungsseitigen Einheiten (16) verbinden, und
einer Steuereinheit (36), die mit der wärmequellenseitigen Einheit (12) und der Mehrzahl von benutzungsseitigen Einheiten (16) über eine Übertragungsleitung verbunden ist und die Einheiten steuert,
**dadurch gekennzeichnet, dass**
in der Steuereinheit (36) ein Steuerprogramm für den Fall, dass die benutzungsseitige Einheit (16) angeschlossen ist, und ein anderes Steuerprogramm für den Fall, dass eine Warmwasserversorgungseinheit (27) zusätzlich zu der benutzungsseitigen Einheit (16) angeschlossen ist, gespeichert sind, und
wenn die Warmwasserversorgungseinheit (27) mit der Flüssigkeitsleitung (30) und der Hochdruckgasleitung (28) verbunden ist, um die wärmequellenseitige Einheit (12) und die benutzungsseitige Einheit (16) zu verbinden, und die Warmwasserversorgungseinheit (27) mit der Übertragungsleitung verbunden ist, erkennt die Steuereinheit (36) die Verbindung mit der Warmwasserversorgungseinheit (27) und ist so ausgebildet, dass sie die wärmequellenseitige Einheit, die benutzungsseitige Einheit und die Warmwasserversorgungseinheit gemäß dem Steuerprogramm in dem Fall steuert, in dem die Warmwasserversorgungseinheit zusätzlich zu der benutzungsseitigen Einheit (16) angeschlossen ist.

2. Klimaanlagensystem (100) nach Anspruch 1, wobei
die Warmwasserversorgungseinheit (27) einen Warmwasserspeichertank (23), einen Wärmetauscher (25) zum Tauschen von Wärme zwischen Wasser in dem Warmwasserspeichertank (23) und einem Hochdruckgaskühlmittel von der wärmequellenseitigen Einheit (12), und eine Steuereinheit (42) zum Steuern der Warmwasserversorgungseinheit (27) aufweist, und
eine Einlassseite des Wärmetauschers (25) mit der Hochdruckgasleitung (28) verbunden ist, eine Auslassseite mit der Flüssigkeitsleitung (30) verbunden ist und die Steuereinheit (42) zur Steuerung der Warmwasserversorgungseinheit (27) mit der Übertragungsleitung verbunden ist.

3. Klimaanlagensystem nach Anspruch 2, wobei
die Warmwasserversorgungseinheit (27) einen Wasserversorgungsanschluss (34) und einen Warmwasserversorgungsanschluss (35), die auf dem Warmwasserversorgungstank (23) vorgesehen sind, eine Umwälzpumpe (24) zum Umwälzen von Wasser innerhalb des Warmwasserspeichertanks (23) durch den Wärmetauscher (25), und ein elektrisches Entspannungsventil (26) aufweist, das in einer Kühlmittelleitung zum Verbinden des Wärmetauschers (25) mit der Flüssigkeitsleitung (30) vorgesehen ist, und
die Umwälzpumpe (24) und das elektrische Entspannungsventil (26) durch die Steuereinheit (42) gesteuert werden, um die Warmwasserversorgungseinheit (27) zu steuern.

4. Klimaanlagensystem (100) nach Anspruch 1,
wobei eine Kühlungs-/Heizungs-Umschalteinheit (22) mit jeder der benutzungsseitigen Einheiten (16) verbunden ist, damit eine Seite des benutzungsseitigen Wärmetauschers (13) mit der Flüssigkeitsleitung (30) über das Entspannungsventil (15) verbunden werden kann, und eine andere Seite mit der Niederdruckgasleitung (29) während des Kühlens oder mit der Hochdruckgasleitung (28) während des Heizens verbunden werden kann.

5. Klimaanlagensystem (100) nach Anspruch 1, das ferner aufweist:
ein Hochdruckgas-Sperrventil (31), das auf der Seite der wärmequellenseitigen Einheit (12) der Hochdruckgasleitung (28) vorgesehen ist,
ein Niederdruckgas-Sperrventil (32), das auf der Seite der wärmequellenseitigen Einheit (12) der Niederdruckgasleitung (29) vorgesehen ist, und
ein Flüssigkeits-Sperrventil (33), das auf der Seite der wärmequellenseitigen Einheit (12) der Flüssigkeitsleitung (30) vorgesehen ist.

6. Klimaanlagensystem (100) nach Anspruch 1,
wobei der Kompressor (1), der in der wärmequellenseitigen Einheit (12) vorgesehen ist, konfiguriert ist durch einen Verstellkompressor oder mehrere Konstantgeschwindigkeitskompressoren und gleichzeitig ein Gas-Flüssigkeits-Separator (11) auf einer Saugseite des Kompressors (1) vorgesehen ist.

7. Klimaanlagensystem (100) nach Anspruch 1, wobei
die Mehrzahl von wärmequellenseitigen Einheiten (12) umfasst sind, und gleichzeitig auf jeder der wärmequellenseitigen Einheiten (12) eine Steuereinheit (36) montiert ist zum Steuern jeder der wärmequellenseitigen Einheiten (12), und
die Steuereinheit (36), die auf jeder der wärmequellenseitigen Einheiten (12) montiert ist, ebenfalls das gesamte Klimaanlagensystem (100) als eine Hauptsteuereinheit steuert.

8. Klimaanlagensystem (100) nach Anspruch 7, wobei
auf jeder der benutzungsseitigen Einheiten (16) und der Warmwasserversorgungseinheit (27) eine Steuereinheit (38, 42) zum Steuern einer jeden Einheit montiert ist,
die Hauptsteuereinheit der einen wärmequellenseitigen Einheit (12) und die Steuereinheit jeder Einheit über die Übertragungsleitung verbunden sind, und
die Hauptsteuereinheit jede der Einheiten über die Steuereinheit jeder Einheit steuert.

## Revendications

1. Système (100) de conditionnement d'air comprenant :
une unité de côté de source de chaleur ayant un compresseur (1), des vannes quatre voies (4, 5), un échangeur de chaleur (7) de côté de source de chaleur, et des détendeurs (6, 10) ;
des unités (16) multiples de côté utilisation ayant chacune un échangeur de chaleur (13) de côté utilisation et un détendeur (15) ;
un tuyau (30) de liquide, un tuyau (28) de gaz haute pression, et un tuyau (29) de gaz basse pression connectant l'unité (12) de côté de source de chaleur et les unités (16) de côté utilisation ; et
un contrôleur (36) étant connecté à l'unité (12) de côté de source de chaleur et aux unités (16) multiples de côté utilisation par l'intermédiaire d'une ligne de transmission et commandant les unités,
**caractérisé en ce que**
dans le contrôleur (36), un programme de commande dans le cas où l'unité (16) de côté utilisation est connectée, et un autre programme de commande dans le cas où une unité (27) d'alimentation en eau chaude est connectée en plus de l'unité (16) de côté utilisation sont stockés ; et
lorsque l'unité (27) d'alimentation en eau chaude est connectée au tuyau (30) de liquide et au tuyau (28) de gaz haute pression pour connecter l'unité (12) de côté de source de chaleur et l'unité (16) de côté utilisation, et que l'unité (27) d'alimentation en eau chaude est connectée à la ligne de transmission, le contrôleur (36) reconnaît la connexion à l'unité (27) d'alimentation en eau chaude et est configuré de manière à commander l'unité de côté de source de chaleur, l'unité de côté utilisation, et l'unité d'alimentation en eau chaude en fonction du programme de commande dans le cas où l'unité d'alimentation en eau chaude est connectée en plus de l'unité (16) de côté utilisation.

2. Système (100) de conditionnement d'air selon la revendication 1,
dans lequel :
l'unité (27) d'alimentation en eau chaude a une cuve (23) de stockage d'eau chaude, un échangeur de chaleur (25) pour échanger de la chaleur entre de l'eau à l'intérieur de la cuve (23) de stockage d'eau chaude et un réfrigérant gazeux haute pression provenant de l'unité (12) de côté de source de chaleur, et un contrôleur (42) pour commander l'unité (27) d'alimentation en eau chaude ; et
un côté d'entrée de l'échangeur de chaleur (25) est connecté au tuyau (28) de gaz haute pression, un côté de sortie est connecté au tuyau (30) de liquide, et le contrôleur (42) pour commander l'unité (27) d'alimentation en eau chaude est connecté à la ligne de transmission.

3. Système (100) de conditionnement d'air selon la revendication 2,
dans lequel :
l'unité (27) d'alimentation en eau chaude a un orifice (34) d'alimentation en eau et un orifice (35) d'alimentation en eau chaude prévus sur la cuve (23) de stockage d'eau chaude, une pompe (24) de circulation pour faire circuler l'eau à l'intérieur de la cuve (23) de stockage d'eau chaude à travers l'échangeur de chaleur (25), et un détendeur électrique (26) prévu sur un tuyau de réfrigérant pour connecter l'échangeur de chaleur (25) et le tuyau (30) de liquide ; et
la pompe (24) de circulation et le détendeur électrique (26) sont commandés par le contrôleur (42) pour commander l'unité (27) d'alimentation en eau chaude.

4. Système (100) de conditionnement d'air selon la revendication 1,
dans lequel, à une unité (22) de commutation refroidissement-chauffage, chacune des unités (16) de côté utilisation est connectée de façon à ce qu'un côté d'un échangeur de chaleur (13) de côté utilisation puisse être connecté au tuyau (30) de liquide par l'intermédiaire du détendeur (15), et qu'un autre côté puisse être connecté au tuyau (29) de gaz basse pression lors du refroidissement ou au tuyau (28) de gaz haute pression lors du chauffage.

5. Système (100) de conditionnement d'air selon la revendication 1, comprenant en outre :
un robinet (31) d'arrêt de gaz haute pression prévu sur le côté d'unité (12) de côté de source de chaleur du tuyau (28) de gaz haute pression ;
un robinet (32) d'arrêt de gaz basse pression prévu sur le côté d'unité (12) de côté de source de chaleur du tuyau (29) de gaz basse pression ; et
un robinet (33) d'arrêt de liquide prévu sur le côté d'unité (12) de côté de source de chaleur du tuyau (30) de liquide.

6. Système (100) de conditionnement d'air selon la revendication 1,
dans lequel le compresseur (1) prévu sur l'unité (12) de côté de source de chaleur est configuré par un compresseur à déplacement variable ou des compresseurs multiples à vitesse constante, et en même temps, un séparateur (11) gaz-liquide est inclus au niveau d'un côté d'aspiration du compresseur (1).

7. Système (100) de conditionnement d'air selon la revendication 1,
dans lequel :
les unités (12) multiples de côté de source de chaleur sont incluses, et en même temps, chacune des unités (12) de côté de source de chaleur monte un contrôleur (36) pour commander chaque unité (12) de côté de source de chaleur ; et
le contrôleur (36) monté sur l'une quelconque des unités (12) de côté de source de chaleur commande également la totalité du système (100) de conditionnement d'air comme un contrôleur principal.

8. Système (100) de conditionnement d'air selon la revendication 7,
dans lequel :
sur chacune des unités (16) de côté utilisation, et sur l'unité (27) d'alimentation en eau chaude, un contrôleur (38, 42) pour commander chaque unité est monté,
le contrôleur principal de l'unité (12) de côté de source de chaleur et le contrôleur de chaque unité sont connectés par l'intermédiaire de la ligne de transmission ; et
le contrôleur principal commande chacune des unités par l'intermédiaire du contrôleur de chaque unité.
